## (19) Europäisches Patentamt
European Patent Office
Office européen des brevets

(11) **EP 1 314 913 B1**

## (12) EUROPÄISCHE PATENTSCHRIFT

(45) Veröffentlichungstag und Bekanntmachung des Hinweises auf die Patenterteilung:
**31.08.2005 Patentblatt 2005/35**

(51) Int Cl.⁷: **F16H 59/46**, F16H 61/00,
F16H 61/38, F16H 59/70

(21) Anmeldenummer: **01127880.1**

(22) Anmeldetag: **23.11.2001**

(54) **Verfahren zum Steuern eines stufenlos verstellbaren Getriebes und Getriebe für ein Kraftfahrzeug**

Method for controlling a continuously variable transmission and transmission for a vehicle

Méthode pour réguler une transmission à variation continue et transmission pour un véhicule

(84) Benannte Vertragsstaaten:
**DE FR GB**

(43) Veröffentlichungstag der Anmeldung:
**28.05.2003 Patentblatt 2003/22**

(73) Patentinhaber: **Ford Global Technologies, LLC
Dearborn, MI 48126 (US)**

(72) Erfinder:
• **Taal, Martin
50259 Pulheim (DE)**
• **Geffers, Peter J.
50829 Köln (DE)**
• **Kirchhoffer, Johann
50737 Köln (DE)**

(74) Vertreter: **Drömer, Hans-Carsten et al
Ford-Werke Aktiengesellschaft,
Patentabteilung NH/DRP,
Henry-Ford-Strasse 1
50725 Köln (DE)**

(56) Entgegenhaltungen:
EP-A- 0 683 334          EP-B- 0 705 399
DE-A- 10 028 708       DE-A- 19 612 870
US-A- 5 025 686

**Beschreibung**

Die Erfindung betrifft ein stufenlos verstellbares Getriebe für ein Kraftfahrzeug mit zwei Kegelscheibensätzen, wobei ein erster Kegelscheibensatz mit einer Antriebseinheit des Kraftfahrzeuges und ein zweiter Kegelscheibensatz mit einer Abtriebseinheit des Kraftfahrzeuges verbunden sind, zwischen beiden Kegelscheibensätzen ein kraftübertragendes Umschlingungselement vorgesehen ist und ein Verfahren zur Steuerung des Getriebes.

Generell gilt bei dieser Technologie Folgendes. Beide Kegelscheibensätze sind mit dem Umschlingungselement kraftschlüssig verbunden, wobei das Umschlingungselement zwischen zwei Kegelscheiben der Kegelscheibensätze verläuft. Jeder Kegelscheibensatz weist zwei Kegelscheiben auf, deren Abstand veränderbar ist. Durch die Veränderung des Abstandes wird der Umschlingungsradius des Umschlingungselementes aufgrund der kegeligen Form der Kegelscheiben verändert. Mit der Veränderung des Umschlingungsradius wird dann das Über- bzw. Untersetzungsverhältnis verändert. Wegen der kegeligen Form der Kegelscheiben kann die Übersetzung stufenlos erfolgen. Da die Länge des Umschlingungselementes konstant ist, muß der Abstand der Kegelscheiben beider Kegelscheibensätze gleichzeitig verändert werden und zwar in entgegengesetzter Richtung. Wird der Abstand der Kegelscheiben des ersten Kegelscheibensatzes verringert und somit der Umschlingungsradius vergrößert, dann muß der Abstand der Kegelscheiben des zweiten Kegelscheibensatzes vergrößert werden, damit der Umschlingungsradius verringert wird und der insgesamt umschlungene Weg des Umschlingungselementes konstant bleibt.

Zusätzlich muß die Anpreßkraft der Kegelscheiben gegen das Umschlingungselement durch geeignete Maßnahmen so eingestellt werden, daß das zu übertragende Moment übertragen werden kann. Ist die Anpreßkraft zu gering, kommt es zu einem hohen Schlupf zwischen dem Umschlingungselement und den Kegelscheibensätzen, der zu einer Beschädigung führen kann. Ist die Anpreßkraft allerdings größer als zur Schlupfvermeidung unbedingt notwendig, so sinkt der Wirkungsgrad des Getriebes ab, was zu einem unnötig hohen Kraftstoffverbrauch führt. Dabei sind Schlupfwerte von 1% bei geringen Drehmomenten und 4% bei hohen Drehmomenten optimal.

Im aus der gattungsbildende europäischen Patentschrift EP 0 705 399 B1 bekannten Stand der Technik wird dazu die aktuelle Position wenigstens einer verschiebbaren Kegelscheibe eines Kegelscheibensatzes gemessen und mit einem in einer Speichereinheit abgelegten Wert verglichen. Daraus wird der aktuelle Schlupf errechnet und mit dem optimalen Schlupf verglichen. Weicht der aktuelle Schlupf von dem optimalen Schlupf ab, wird der Anpreßdruck zwischen Umschlingungselement und Kegelscheibensatz verändert.

Der Nachteil an diesen Verfahren ist, daß sehr hohe Schlupfänderungen aus einer geringen Abweichung der Meßgröße resultieren und zweitens daß die Position der Kegelscheibe ständig genau bestimmt werden muß, um den aktuellen Schlupf entsprechend zu berechnen, so daß hier dauernde Messung mit einem entsprechend teuren Sensor vorgesehen werden muß.

Geringfügige Verschleißerscheinungen an dem Umschlingungselement bzw. den Kegelscheiben werden bei dieser Meßmethode nicht berücksichtigt, so daß die Meßmethode mit zunehmender Laufleistung des Kraftfahrzeuges an Meßgenauigkeit abnimmt.

Weiterhin sind aus dem Stand der Technik z. B. aus der WO 98/43003 eine Beeinflussung des Schlupfes durch Öffnen der Kupplung, Änderung der Übersetzung und Änderung des Ausgangsmomentes der Antriebseinheit bekannt. Wie die Berechnung des Schlupfes erfolgen soll, wird hier jedoch nicht angesprochen.

Aus der EP 0 833 085 A2 ist ein stufenlos verstellbares Getriebe mit einem Wandler bekannt, bei dem zwischen dem Wandler und dem CVT-(Continuous Variable Transmission) Getriebe eine Überbrückungskupplung vorgesehen ist. Während die Überbrückungskupplung geschlossen wird, wird das stufenlos verstellbare Getriebe in Richtung kürzerer Übersetzungsverhältnisse verstellt. Auf diese Weise kann die Motordrehzahl nahezu konstant gehalten werden.

Aus der EP 0 529 777 B1 ist ein Verfahren zum Herunterschalten eines stufenlosen Getriebes bekannt, wobei das Herunterschalten durch Einstellen verschiedener Druckverhältnisse im Primär- und Sekundärelement vorgenommen wird. Auch aus diesen beiden Verfahren ist nicht bekannt, wie die aufwendige Berechnung des aktuellen Schlupfes verbessert werden soll.

Aus diesem Stand der Technik stellt sich der Erfindung das Problem, die Regelung des aktuellen Schlupfes möglichst zu vereinfachen, wobei auch Verschleißerscheinungen an dem Umschlingungselement sowie an den Kegelscheiben keinen nachteiligen Einfluß haben sollen, wobei die Regelung mit einem entsprechenden Getriebe möglichst kostengünstig konstruktiv gelöst werden soll.

Das Problem wird erfindungsgemäß durch die Merkmale des Anspruchs 1 und Anspruchs 5 gelöst. Vorteilhafte Aus- und Weiterbildungen sind in den Unteransprüchen angegeben.

Als verfahrenstechnische Lösung des Problems wird vorgeschlagen, daß der aktuelle Schlupf zwischen dem Umschlingungselement und den Kegelscheibensätzen lediglich ab dem Überschreiten eines vorgegebenen Übersetzungsverhältnisses und/oder dem Unterschreiten eines vorgegebenen Untersetzungsverhältnisses gemessen wird und in Abhängigkeit von dem Unterschied zwischen dem aktuellen Schlupf und einem vorgegebenen Sollschlupf die Anpreßkraft zwischen Umschlingungselement und wenigstens einem der beiden Kegelscheibensätze verändert wird.

Die Erfindung nutzt dabei die Erkenntnis, daß es ausreicht, den Schlupf lediglich in hohen Über- bzw. Untersetzungsverhältnissen durch Veränderung der Anpreßkraft zu verändern, da hier die größten Nachteile hinsichtlich Kraftstoffverbrauch und Beschädigungen zu erwarten sind, aber auch Approximationen für alle anderen Übersetzungsverhältnisse vorgenommen werden können. Eine aufwendige ständige Positionsmessung einer Kegelscheibe, wie im Stand der Technik vorgesehen, kann damit entfallen. Die Messung des aktuellen Schlupfes erfolgt dann in bekannterweise durch Vergleich der aktuellen Drehzahlen mit den Solldrehzahlen unter Zuhilfenahme wenigstens eines Umschlingungsradius, der durch die geometrische Grenzposition bestimmt ist.

Eine einfache Möglichkeit, das Unter- bzw. Überschreiten des vorgegebenen Unter- bzw. Übersetzungsverhältnisses zu sensieren, besteht darin, Mittel vorzusehen, mit denen das Erreichen einer vorgegebenen Grenzposition einer Kegelscheibe des ersten Kegelscheibensatzes sensiert und bei Erreichen der vorgegebenen Grenzposition das Über- und/oder Unterschreiten des vorgegebenen Übersetzungsverhältnisses erkannt wird.

Das Erreichen der vorgegebenen Grenzposition kann in vorteilhafterweise z.B. durch einen Anschlagsensor ermittelt werden, der jeweils die Funktionen in sich vereinigt.

Alternativ kann das Erreichen der vorgegebenen Grenzwerte der Unter- bzw. Übersetzungsverhältnisse dadurch festgestellt werden, daß unter bestimmten Betriebsbedingungen, bei denen die Unter- bzw. Übersetzungsverhältnisse auftreten, die Drehgeschwindigkeit und die Beschleunigung wenigstens eines Kegelscheibensatzes unter bestimmten Betriebsbedingungen, bei denen die Unter- bzw. Übersetzungsverhältnisse auftreten, sensiert werden und vorgegebene Grenzwerte der Drehgeschwindigkeit und Beschleunigungen überschritten bzw. unterschritten werden. Damit entfallen die Anschlagsensoren und die im Stand der Technik verwendeten Positionssensoren. Bei Überschreiten der Grenzwerte wird dann in analoger Weise der Schlupf durch eine entsprechende Anpassung des Anpreßdruckes geregelt.

Die Positionierung der Anschlagsensoren bzw. die Ermittlung der geometrischen Grenzposition ist anhand von Versuchen bzw. aufgrund von Erfahrungen vorzunehmen. Unabhängig von der Wahl bzw. der Positionierung der Anschlagsensoren wird durch die Erfindung der Vorteil gewonnen, daß die Position der Kegelscheiben nicht ständig gemessen werden muß und bei Verwendung von Anschlagsensoren auch einfache und kostengünstige Sensoren verwendet werden können.

Die Erfindung wird nachfolgend anhand eines Ausführungsbeispieles näher erläutert.

Die Zeichnungen zeigen im einzelnen:

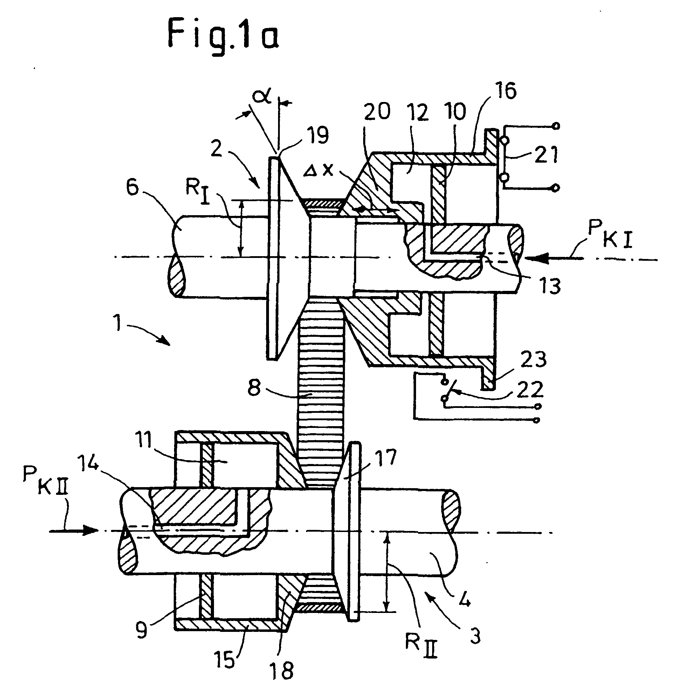

Fig. 1a      Stufenloses, verstellbares Getriebe mit zwei Kegelscheibensätzen und einem Umschlingungselement;

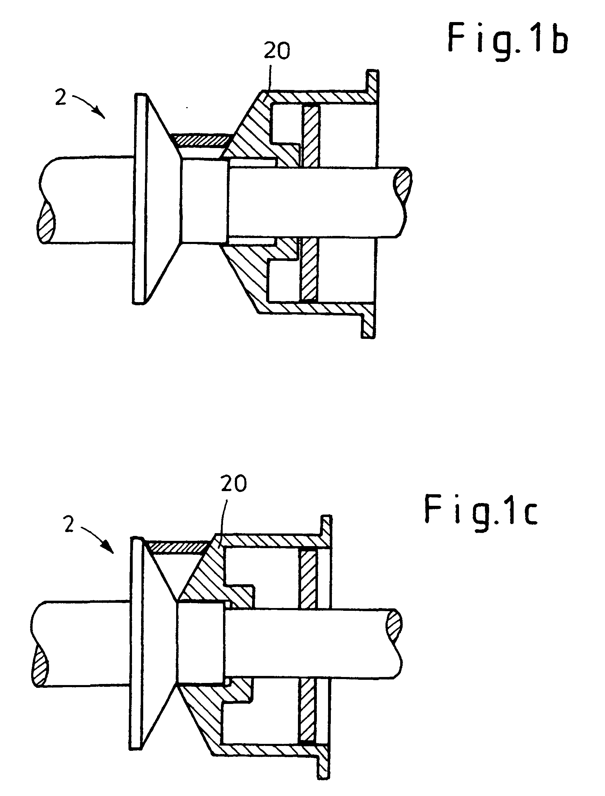

Fig. 1b      Darstellung der geometrischen Grenzposition im Untersetzungsverhältnis am ersten Kegelscheibensatz;

Fig. 1b      Darstellung der geometrischen Grenzposition im Übersetzungsverhältnis am ersten Kegelscheibensatz;

Fig. 2      Zusammenhang zwischen der Verstellung der Kegelscheibe des ersten Kegelscheibensatzes und des Übersetzungsverhältnisses;

Fig. 3      Veränderung des Übersetzungsverhältnisses bei Abbremsung des stufenlos verstellbaren Getriebes;

In Figur 1 ist ein Variator 1 zu erkennen, der aus einem ersten Kegelscheibensatz 2 und einem zweiten Kegelscheibensatz 3 besteht, wobei beide Kegelscheibensätze 2 und 3 von einem Umschlingungselement 8 umschlungen werden.

Der erste Kegelscheibensatz 2 ist mit einer nicht dargestellten Antriebseinheit eines Kraftfahrzeuges verbunden. Dies kann z.B. eine Brennkraftmaschine, ein Elektromotor oder ein anderes bekanntes Antriebsaggregat für Kraftfahrzeuge sein. Zwischen der Antriebseinheit und dem ersten Kegelscheibensatz ist üblicherweise zusätzlich eine Kupplung und/oder ein Wandler vorgesehen. Der zweite Kegelscheibensatz 3 ist mit der Abtriebseinheit des Fahrzeuges, welches üblicherweise die Antriebsräder sind, wirkverbunden. Zwischen den Antriebsrädern und dem zweiten Kegelscheibensatz 3 kann zusätzlich ein Getriebe zwischengeschaltet sein. Jeder Kegelscheibensatz 2 und 3 besitzt eine axial feststehende Welle 6 und 4 mit einer daran angeordneten Kegelscheibe 17 und 19. Weiterhin weist jeder Kegelscheibensatz 2 und 3 jeweils eine verschiebbare Kegelscheibe 20 und 18 auf. Jede bewegbare Kegelscheibe 20 und 18 ist an ihrem äußeren Ende mit einem ringzylindrischen Axialfortsatz 16 und 15 versehen. Die Wellen 4 und 6 weisen zusätzlich je einen ringzylindrischen Flansch 9 und 10 auf, die dichtend an der Innenseite der ringzylindrischen Axialfortsätze 15 und 16 anliegen. Auf diese Weise ergeben sich zwei durch die ringzylindrischen Axialfortsätze 15 und 16, die Flansche 9 und 10, die Wellen 4 und 6 sowie die Rückseite der Kegelscheiben 20 und 18 gebildete Druckräume 11 bzw. 12. Die Druckräume 11 und 12 sind über Druckleitungen 13 und 14 mit einer externen Druckversorgungseinrichtung verbunden. Durch Druckbeaufschlagung des Druckraumes 11 bzw. 12 mit einem Druck $p_{KI}$ und $p_{KII}$ können die Kegelscheiben 20 und 18 in Richtung der Kegelscheiben 17 und 19 verschoben werden. Die Verstellung des Übersetzungsverhältnisses erfolgt nun in folgenden Schritten.

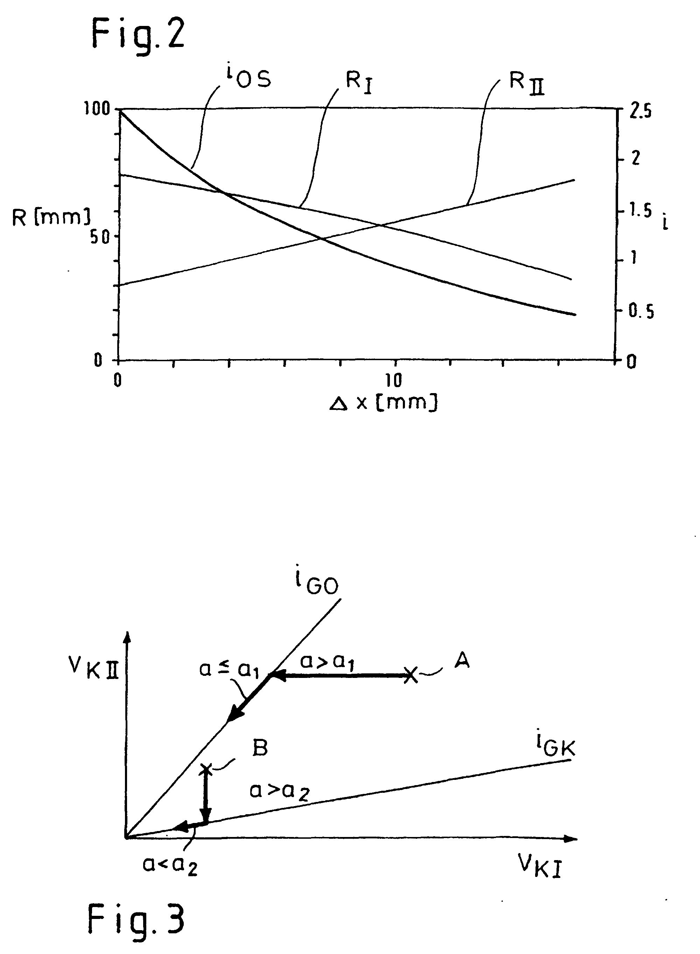

Zunächst wird der Druck in dem Druckraum 12 durch Erhöhung des Druckes $p_{KI}$ erhöht. Durch die Druckerhöhung wird die verschiebbare Kegelscheibe 20 von ihrer in Figur 1b dargestellten geometrischen Grenzposition im Untersetzungsverhältnis um einen Weg Δx auf die Kegelscheibe 19 verschoben. Wegen der Kegelform der Kegelscheibe 19 und 20 wird dabei der Umschlingungsradius $R_I$ des Umschlingungsmittels 8 vergrößert. Gleichzeitig wird durch die unveränderbare Länge des Umschlingungsmittels 8 die Kegelscheibe 18 von der Kegelscheibe 17 weg bewegt, so daß sich der Radius $R_{II}$ um den zweiten Kegelscheibensatz 3 verringert. Der Zusammenhang zwischen dem Umschlingungradius $R_I$ und $R_{II}$ und dem Übersetzungsverhältnis ohne Schlupf $i_{OS}$ ist aus Figur 2 zu entnehmen.

Ferner ist in Figur 1 zu erkennen, daß dem ringzylindrischen Axialfortsatz 16 der beweglichen Kegelscheibe 20 jeweils zwei Anschlagsensoren 21 und 22 zugeordnet sind. Der Axialfortsatz 16 kann dabei an seinem Ende zusätzlich einen Flansch 23 aufweisen, der sich radial von dem Axialfortsatz 16 erstreckt und als Kontaktfläche und/oder Anschlagfläche für einen der Anschlagsensoren 21 oder 22 dienen kann. Wird die bewegliche Kegelscheibe 20 nun nach rechts in Richtung des Anschlagsensors 21 bewegt, wird ab einer definierten Position durch den Axialfortsatz 16 ein Signal in dem Anschlagsensor 21 erzeugt, durch das schließlich das Erreichen der Grenzposition sensiert wird. Wird die bewegliche Kegelscheibe 20 mit dem Axialfortsatz 16 nach links in Richtung der Kegelscheibe 19 verschoben, dann wird das Erreichen der Grenzposition schließlich durch den Flansch 23 und den Anschlagsensor 22 in analoger Weise sensiert. Ab dem Erreichen der Grenzstellungen wird der aktuelle Schlupf ermittelt und mit einem vorgegebenen Sollschlupf verglichen. Der aktuelle Schlupf kann z.B. durch Messung der Drehzahlen der Kegelscheibensätze 2 und 3 ermittelt werden. Durch die Sensierung der beiden in den Figuren 1b und 1c dargestellten Grenzpositionen wird ein zu erwartendes Drehzahlverhältnis ermittelt, welches auf den festen geometrischen Verhältnissen und Erfahrungswerten basiert. Das so ermittelte Drehzahlverhältnis wird dann mit dem aktuellen verglichen und somit der aktuelle Schlupf ermittelt. Weicht der aktuelle Schlupf von dem Sollschlupf um eine vorgegebene Differenz ab, so wird der Anpreßdruck des Umschlingungsmittels um den zweiten Kegelscheibensatz 3 verändert. Durch die vorgegebenen Grenzstellungen der Kegelscheiben wird auch das vorgegebene Über- bzw. Untersetzungsverhältnis festgelegt. Der Druck wird dabei nach folgender Formel berechnet

$$P_{K_{II_{rech}}} = \frac{m_c \cdot f_s \cdot \cos \alpha}{a_k \cdot \mu \cdot R_I \cdot K_p \div K_s .}$$

Dabei ist $m_c$ das Eingangsmoment des Kegelscheibensatzes 2, $f_s$ ein Sicherheitsfaktor, $\alpha$ der Winkel zwischen der Vertikale und der zu dem Umschlingungsmittel 8 weisenden Fläche der Kegelscheiben 19, 20, 17 und 18, die Fläche $a_k$ die wirksame Druckfläche auf der Rückseite der Kegelscheibe 18 in Verstellrichtung,

μ ein angenommener Reibungskoeffizient, $R_I$ der Umschlingungsradius des Umschlingungselementes 8 um den ersten Kegelscheibensatz 2, $K_p$ die Spannkraft zwischen dem ersten Kegelscheibensatz 2 und dem Umschlingungselement und $K_s$ die wirkenden Spannkräfte zwischen dem zweiten Kegelscheibensatz 3 und dem Umschlingungselement 8.

Die Druckleitungen 13 und 14 sind dabei in vorteilhafter Weise mittig in den Wellen 4 und 6 angeordnet, so daß die hieran angeordneten Anschlußleitungen während der Drehung der Welle nicht mit rotieren müssen. In allen Positionen, die nicht durch die Anschlagsensoren 21 und 22 definierte Grenzstellungen sind, kann eine adaptive Nachregulierung des Anpreßdruckes, basierend auf den jeweilig gemessenen Grenzpositionen, stattfinden.

Die Übersetzungsverhältnisse, ab denen eine Nachregulierung des Anpreßdruckes stattfindet, können auch durch die Sensierung des Übersetzungsverhältnisses und deren Änderung mit Hilfe der Drehgeschwindigkeiten und Drehbeschleunigungen festgestellt werden. Damit können die Anschlagsensoren entfallen. Diese Sensierung der Drehbeschleunigung bzw. Geschwindigkeiten erfolgt in bekannter Weise, so daß dieses hier nicht näher erläutert zu werden braucht. Nach Festlegung eines minimalen Grenzwertes des Gradienten des Drehzahlverhältnisses basierend auf Drehbeschleunigungen bzw. Geschwindigkeiten, kann dann die Nachregulierung des Anpreßdruckes, wie oben beschrieben, erfolgen. Auch hier entfällt eine Nachregulierung des Anpreßdruckes zwischen den vorgegebenen Grenzwerten, so daß auch hier die Vorteile der Erfindung zum Tragen kommen.

In Figur 3 ist die Veränderung des Übersetzungsverhältnisses des stufenlosen Getriebes bei Abbremsung dargestellt. Dabei ist in dem Diagramm die Geschwindigkeit $v_{KII}$ des zweiten Kegelscheibensatzes 3 über der Geschwindigkeit $v_{KI}$ des ersten Kegelscheibensatzes 2 aufgetragen. Zunächst befindet sich der Variator 1 im Zustand A. Anschließend wird das Fahrzeug durch Schließen der Drosselklappe abgebremst, dabei wird zusätzlich gefragt, ob der Gradient des Übersetzungsverhältnisses a kleiner als oder gleich wie ein vorgegebener Grenzwert $a_1$ ist. Liegt der Zustand vor, wird das Erreichen der geometrischen Grenzposition festgestellt. Der Variator 1 wird durch das Schließen der Drosselklappe abgebremst und die Geschwindigkeit $v_{KII}$ des zweiten Kegelscheibensatzes 3 bleibt annähernd gleich, während die Geschwindigkeit $v_{KI}$ des ersten Kegelscheibensatzes 2 verringert wird. Die Geschwindigkeit $v_{KI}$ wird soweit verringert, bis das vorgegebene Übersetzungsverhältnis $i_{GO}$ erreicht wird. Ab Erreichen des Verhältnisses wird sowohl die Geschwindigkeit $v_{KII}$ des zweiten Kegelscheibensatzes 3 sowie die Geschwindigkeit $v_{KI}$ des ersten Kegelscheibensatzes 2 entlang der Geraden $i_{GO}$ heruntergefahren. Durch ständige Überwachung des Drehzahlverhältnisses erkennt die Getriebesteuerung, daß der Gradient des Drehzahlverhältnisses einen minimalen Grenzwert unterschritten hat, wodurch letztlich das Erreichen der geometrischen Grenzposition sensiert wird. Dieser minimale Grenzwert des Veränderungsgradienten des Drehzahlverhältnisses sollte im optimalen Fall gleich Null sein, kann aber gegebenenfalls durch Erfahrungswerte angepaßt werden.

Ähnlich verhält sich die Veränderung des Geschwindigkeitsverhältnisses, wenn die Abbremsung bei geringen Geschwindigkeiten, wie im Zustand B abgebremst wird. Auch hier wird zunächst gefragt, ob die Übersetzungsänderung a kleiner als oder gleich wie ein zweiter vorgegebener Grenzwert $a_2$ des Gradienten des Übersetzungsverhältnisses ist. Sollte dies der Fall sein, wird das Erreichen der geometrischen Grenzposition im Untersetzungsverhältnis erkannt. Bei dem Abbremsen aus dem Zustand B wird zunächst die Geschwindigkeit $v_{KI}$ des ersten Kegelscheibensatzes 2 nahezu beibehalten und die Geschwindigkeit des zweiten Kegelscheibensatzes $v_{KII}$ vermindert bis das vorgegebene Untersetzungsverhältnis $i_{GU}$ erreicht ist. Nach dem Erreichen der Gerade $i_{GU}$ wird dann auch die Geschwindigkeit $v_{KI}$ des ersten Kegelscheibensatzes 2 entlang der Gerade $i_{GU}$ verringert.

**Bezugszeichen**

| 1 | Variator |
|---|---|
| 2 | erster Kegelscheibensatz |
| 3 | zweiter Kegelscheibensatz |
| 4 | Welle |
| 6 | Welle |
| 8 | Umschlingungselement |
| 9 | Flansch |
| 10 | Flansch |
| 11 | Druckraum |
| 12 | Druckraum |
| 13 | Druckleitung |
| 14 | Druckleitung |
| 15 | Axialfortsatz |
| 16 | Axialfortsatz |
| 17 | Kegelscheibe |
| 18 | Kegelscheibe |
| 19 | Kegelscheibe |
| 20 | Kegelscheibe |
| $v_{KI}$ | Drehgeschwindigkeit des ersten Kegelscheibensatzes |
| $v_{KII}$ | Drehgeschwindigkeit des zweiten Kegelscheibensatzes |
| a | Gradient des Übersetzungsverhältnisses |
| $a_1$ | vorgegebener Grenzwert im Übersetzungsverhältnis |
| $a_2$ | vorgegebener Grenzwert im Untersetzungsverhältnis |
| $i_{GO}$ | vorgegebenes Übersetzungsverhältnis |
| $i_{GU}$ | vorgegebenes Untersetzungsverhältnis |

| $p_{KI}$ | Druck im Druckraum des ersten Kegelscheibensatzes |
|---|---|
| $p_{KII}$ | Druck im Druckraum des zweiten Kegelscheibensatzes |

**Patentansprüche**

1. Verfahren zum Steuern eines stufenlos verstellbaren Getriebes eines Kraftfahrzeuges mit zwei Kegelscheibensätzen (2,3), wobei ein erster Kegelscheibensatz (2) mit einer Antriebseinheit des Kraftfahrzeuges und ein zweiter Kegelscheibensatz (3) mit einer Abtriebseinheit des Kraftfahrzeuges verbunden sind, zwischen beiden Kegelscheibensätzen (2, 3) ein kraftübertragendes Umschlingungselement (8) vorgesehen ist, **dadurch gekennzeichnet, daß** der aktuelle Schlupf zwischen dem Umschlingungselement (8) und den Kegelscheibensätzen (2, 3) lediglich ab dem Überschreiten eines vorgegebenen Übersetzungsverhältnis ($i_{GO}$) und/oder dem Unterschreiten eines vorgegebenen Untersetzungsverhältnisses ($i_{GU}$) gemessen wird, und in Abhängigkeit von dem Unterschied zwischen dem aktuellen Schlupf und einem vorgegebenen Sollschlupf die Anpreßkraft zwischen dem Umschlingungselement (8) und wenigstens einem der beiden Kegelscheibensätze (2,3) verändert wird.

2. Verfahren nach Anspruch 1, **dadurch gekennzeichnet, daß** Mittel (21,22) vorgesehen sind mit denen das Erreichen einer vorgegebenen Grenzposition einer Kegelscheibe (20,18) eines der beiden Kegelscheibensätze (2,3) sensiert wird und bei Erreichen der vorgegebenen Grenzposition das Überschreiten und/oder das Unterschreiten des vorgegebenen Über- und/oder Untersetzungsverhältnisses ($i_{GO}$) erkannt wird.

3. Verfahren nach einem der Ansprüche 1 oder 2, **dadurch gekennzeichnet, daß** die Mittel (21,22) Anschlagsensoren sind.

4. Verfahren nach Anspruch 1, **dadurch gekennzeichnet, daß** der Gradient des Übersetzungsverhältnisses (a), basierend auf den Drehgeschwindigkeiten ($v_{KI}$, $v_{KII}$) der beiden Kegelscheibensätze (2, 3), sensiert wird und bei dem Unterschreiten vorgegebener Grenzwerte ($a_1$, $a_2$) eine Unter- bzw. Überschreitung des vorgegebenen Unter- bzw. Übersetzungsverhältnisses ($i_{GO}$, $i_{GU}$) festgestellt wird und damit die geometrischen Grenzpositionen ermittelt werden.

5. Stufenlos verstellbares Getriebe eines Kraftfahrzeuges mit zwei Kegelscheibensätzen (2,3), wobei ein erster Kegelscheibensatz (2) mit einer Antriebseinheit des Kraftfahrzeuges und ein zweiter Kegelscheibensatz (3) mit einer Abtriebseinheit des Kraftfahrzeuges verbunden sind, zwischen beiden Kegelscheibensätzen (2, 3) ein kraftübertragendes Umschlingungselement (8) vorgesehen ist, **dadurch gekennzeichnet, daß** der aktuelle Schlupf zwischen dem Umschlingungselement (8) und den Kegelscheibensätzen (2, 3) lediglich ab dem Überschreiten eines vorgegebenen Übersetzungsverhältnisses ($i_{GO}$) und/oder dem Unterschreiten eines vorgegebenen Untersetzungsverhältnisses ($i_{GU}$) messbar ist, und in Abhängigkeit von dem Unterschied zwischen dem aktuellen Schlupf und einem vorgegebenen Sollschlupf die Anpreßkraft zwischen dem Umschlingungselement (8) und wenigstens einem der beiden Kegelscheibensätze (2,3) veränderbar ist.

6. Stufenlos verstellbares Getriebe nach Anspruch 5, **dadurch gekennzeichnet, daß** Mittel (21,22) vorgesehen sind, mit denen das Erreichen einer vorgegebenen Grenzposition einer Kegelscheibe (20,18) eines der beiden Kegelscheibensätze (2,3) sensierbar ist und bei Erreichen der vorgegebenen Grenzposition das Überschreiten und/oder das Unterschreiten des vorgegebenen Über- und/oder Untersetzungsverhältnis ($i_{GO}$) detektierbar ist.

7. Stufenlos verstellbares Getriebe nach einem der Ansprüche 5 oder 6, **dadurch gekennzeichnet, daß** die Mittel (21,22) Anschlagsensoren sind.

8. Stufenlos verstellbares Getriebe nach Anspruch 5, **dadurch gekennzeichnet, daß** der Gradient des Übersetzungsverhältnisses (a), basierend auf den Drehgeschwindigkeiten ($v_{KII}$, $v_{KII}$) der beiden Kegelscheibensätze (2, 3), sensierbar ist und bei dem Unterschreiten vorgegebener Grenzwerte ($a_1$, $a_2$) eine Unter- bzw. Überschreitung des vorgegebenen Unter- bzw. Übersetzungsverhältnisses ($i_{GO}$, $i_{GU}$) feststellbar ist und damit die geometrischen Grenzpositionen ermittelbar sind.

**Claims**

1. Method for controlling a continuously variable transmission of a motor vehicle having two sets of bevel discs (2, 3), a first set of bevel discs (2) being connected to a drive unit of the motor vehicle, and a second set of bevel discs (3) being connected to an output unit of the motor vehicle, a force-transmitting wrap-around element (8) being provided between the two sets of bevel discs (2, 3), **characterized in that** the current slip between the wrap-around element (8) and the sets of bevel discs (2, 3) is measured only from the overshooting of a predetermined step-up ratio ($i_{GO}$) and/or the undershooting of a predetermined step-down ratio ($i_{GU}$), and the pressure force between the wrap-around element (8) and at least one of the two sets of bevel discs (2, 3) being varied as a function of the difference between the current slip and a predetermined desired slip.

2. Method according to Claim 1, **characterized in that** means (21, 22) are provided, by which the reaching of a predetermined limit position of a bevel disc (20, 18) of one of the two sets of bevel discs (2, 3) is sensed, and, when the predetermined limit position is reached, the overshooting and/or undershooting of the predetermined step-up and/or step-down ratio ($i_{GO}$) is detected.

3. Method according to either one of Claims 1 and 2, **characterized in that** the means (21, 22) are stop sensors.

4. Method according to Claim 1, **characterized in that** the gradient of the step-up ratio (a), based on the rotational speeds ($v_{KI}$, $v_{KII}$) of the two sets of bevel discs (2, 3) is sensed, and, in the case of the undershooting of predetermined limit values ($a_1$, $a_2$), an undershooting or overshooting of the predetermined step-down or step-up ratio ($i_{GO}$, $i_{GU}$) is detected, and, consequently, the geometric limit positions are determined.

5. Continuously variable transmission of a motor vehicle having two sets of bevel discs (2, 3), a first set of bevel discs (2) being connected to a drive unit of the motor vehicle and a second set of bevel discs (3) being connected to an output unit of the motor vehicle, a force-transmitting wrap-around element (8) being provided between the two sets of bevel discs (2, 3), **characterized in that** the current slip between the wrap-around element (8) and the sets of bevel discs (2, 3) can be measured only from the overshooting of a predetermined step-up ratio ($i_{GO}$) and/or the undershooting of a predetermined step-down ratio ($i_{GU}$), and the pressure force between the wrap-around element (8) and at least one of the two sets of bevel discs (2, 3) can be varied as a function of the difference between the current slip and a predetermined desired slip.

6. Continuously variable transmission according to Claim 5, **characterized in that** means (21, 22) are provided, by which the reaching of a predetermined limit position of a bevel disc (20, 18) of one of the two sets of bevel discs (2, 3) can be sensed, and, when the predetermined limit position is reached, the overshooting and/or the undershooting of the predetermined step-up and/or step-down ratio ($i_{GO}$) can be detected.

7. Continuously variable transmission according to either one of Claims 5 and 6, **characterized in that** the means (21, 22) are stop sensors.

8. Continuously variable transmission according to Claim 5, **characterized in that** the gradient of the step-up ratio (a), based on the rotational speeds ($v_{KI}$, $v_{KII}$) of the two sets of bevel discs (2, 3), can be sensed, and, in the case of the undershooting of predetermined limit values ($a_1$, $a_2$), an undershooting or overshooting of the predetermined step-down or step-up ratio ($i_{GO}$, $i_{GU}$) can be detected, and, consequently, the geometric limit positions can be determined.

## Revendications

1. Procédé pour réguler une transmission à variation continue d'un véhicule automobile comprenant deux jeux de poulies coniques (2, 3), un premier jeu de poulies coniques (2) étant connecté à une unité d'entraînement du véhicule automobile et un deuxième jeu de poulies coniques (3) étant connecté à une unité de sortie du véhicule automobile, un élément de courroie (8) transmettant les forces étant prévu entre les deux jeux de poulies coniques (2, 3), **caractérisé en ce que** le glissement actuel entre l'élément de courroie (8) et les jeux de poulies coniques (2, 3) est mesuré seulement à partir du dépassement d'un rapport de multiplication prédéterminé ($i_{GO}$) et/ou à partir du dépassement par le bas d'un rapport de démultiplication prédéterminé ($i_{GU}$), et en fonction de la différence entre le glissement actuel et un glissement de consigne prédéterminé, la force de pression entre l'élément de courroie (8) et au moins l'un des deux jeux de poulies coniques (2, 3) est modifiée.

2. Procédé selon la revendication 1, **caractérisé en ce que** des moyens (21, 22) sont prévus, avec lesquels l'obtention d'une position limite prédéfinie d'une poulie conique (20, 18) de l'un des deux jeux de poulies coniques (2, 3) est détectée et à l'obtention de la position limite prédéterminée, le dépassement et/ou le dépassement par le bas du rapport de multiplication et/ou de démultiplication ($i_{GO}$) prédéterminé est reconnu.

3. Procédé selon l'une quelconque des revendications 1 ou 2, **caractérisé en ce que** les moyens (21, 22) sont des capteurs de butée.

4. Procédé selon la revendication 1, **caractérisé en ce que** le gradient du rapport de multiplication (a), basé sur les vitesses de rotation ($v_{KI}$, $v_{KII}$) des deux jeux de poulies coniques (2, 3), est détecté, et en cas de dépassement par le bas de valeurs limites prédéterminées ($a_1$, $a_2$), un dépassement par le bas ou un dépassement du rapport prédéfini de démultiplication ou de multiplication ($i_{GO}$, $i_{GU}$) est établi et de ce fait les positions limites géométriques sont déterminées.

5. Transmission à variation continue d'un véhicule automobile comprenant deux jeux de poulies coniques (2, 3), un premier jeu de poulies coniques (2) étant connecté à une unité d'entraînement du véhicule automobile et un deuxième jeu de poulies coniques (3) étant connecté à une unité de sortie du véhicule automobile, un élément de courroie (8) transmettant les forces étant prévu entre les deux jeux de poulies coniques (2, 3), **caractérisé en ce que** le glissement actuel entre l'élément de courroie (8) et les jeux de poulies coniques (2, 3) peut être mesuré seulement à partir du dépassement d'un rapport de multiplication prédéterminé ($i_{GO}$) et/ou à partir du dépassement par le bas d'un rapport de démultiplication prédéterminé ($i_{GU}$), et en fonction de la différence entre le glissement actuel et un glissement de consigne prédéterminé, la force de pression entre l'élément de courroie (8) et au moins l'un des deux jeux de poulies coniques (2, 3) peut être modifiée.

6. Transmission à variation continue selon la revendication 5, **caractérisée en ce que** des moyens (21, 22) sont prévus, avec lesquels l'obtention d'une position limite prédéfinie d'une poulie conique (20, 18) de l'un des deux jeux de poulies coniques (2, 3) peut être détectée et à l'obtention de la position limite prédéterminée, le dépassement et/ou le dépassement par le bas du rapport de multiplication et/ou de démultiplication ($i_{GO}$) prédéterminé peut être détecté.

7. Transmission à variation continue selon l'une quelconque des revendications 5 ou 6, **caractérisée en ce que** les moyens (21, 22) sont des capteurs de butée.

8. Transmission à variation continue selon la revendication 5, **caractérisée en ce que** le gradient du rapport de multiplication (a), basé sur les vitesses de rotation ($v_{KI}$, $v_{KII}$) des deux jeux de poulies coniques (2, 3), peut être détecté, et en cas de dépassement par le bas de valeurs limites prédéterminées ($a_1$, $a_2$), un dépassement par le bas ou un dépassement du rapport prédéfini de démultiplication ou de multiplication ($i_{GO}$, $i_{GU}$) peut être établi et de ce fait les positions limites géométriques peuvent être déterminées.

# Fig.1a

Fig.1b

20

2

Fig.1c

20

2

Fig.2

Fig.3